# EUROPÄISCHE PATENTANMELDUNG

(11) **EP 4 167 449 A1**
(43) Veröffentlichungstag der Anmeldung: **19.04.2023**
(21) Anmeldenummer: 21202916.9
(22) Anmeldetag: 15.10.2021
(51) Int. Cl.: H02K 9/02, H02K 7/18, H02K 5/20, F03D 80/60, F03D 9/25

(54) **GENERATOR UND WINDENERGIEANLAGE**

(71) Anmelder: Wobben Properties GmbH, 26607 Aurich (DE)
(72) Erfinder: Enskonatus, Kai, Hinte (DE); Müller, Michael, Wiegboldsbur (DE); Philipp, Alexander, Reilingen (DE)
(74) Vertreter: Eisenführ Speiser

(57) **Zusammenfassung**

Generator (10), insbesondere Generator (10) für eine Windenergieanlage (100), der Generator (10) aufweisend: zwei Stirnseiten (17, 18) zwischen denen sich ein Generatorinnenraum (16) des Generators (10) in einer Axialrichtung (A) erstreckt; wobei die zwei Stirnseiten (17, 18) aufweisen: eine Innenseite, die einem Generatorinnenraum (16) des Generators (10) zugewandt ist, und eine der Innenseite (12) gegenüberliegende Außenseite (13), die einer Umgebung (E) des Generators (10) zugewandt ist, mindestens einen Luftauslasskanal (14) und mindestens einen Lufteinlasskanal (15), die sich zwischen der Innenseite (12) und der Außenseite (13) erstrecken und jeweils den Generatorinnenraum (16) strömungstechnisch mit der Umgebung (E) verbinden, dadurch gekennzeichnet, dass der mindestens eine Luftauslasskanal (14) und der mindestens eine Lufteinlasskanal (15) an derselben Stirnseite (17, 18) des Generators (10) angeordnet sind.

## Beschreibung

Die Erfindung betrifft einen Generator, insbesondere einen Generator für eine Windenergieanlage. Ferner betrifft die Erfindung eine Windenergieanlage.

Windenergieanlagen emittieren im Betrieb Schall. Grund hierfür sind beispielsweise Verwirbelungen des Windes an den Rotorblättern der Windenergieanlagen. Auch Aggregate innerhalb von Windenergieanlagen stellen im Betrieb mögliche Schallquellen dar. Eine wesentliche Schallquelle sind beispielsweise Kühlvorrichtungen, die etwa zur Kühlung eines (elektrischen) Generators von Windenergieanlagen einen Luftstrom erzeugen. Durch die Förderung und Umlenkung des Luftstroms innerhalb des Generators, insbesondere durch schmale Spalte und dergleichen, entstehen auch hierbei regelmäßig Verwirbelungen, die Schall emittieren.

Den Schall nehmen Menschen und Tiere in einem bestimmten Frequenzbereich als Geräusch mit einer bestimmten Lautstärke wahr. Die Lautstärke ist durch den Schalldruckpegel charakterisiert. Zum Schutz von Menschen und Tieren dürfen Windenergieanlagen im Betrieb eine bestimmte Lautstärke (Grenzwert) aufgrund gesetzlicher Vorgaben nicht überschreiten. Der zulässige Grenzwert, den eine Windenergieanlage nicht überschreiten darf, hängt üblicherweise vom Standort der Windenergieanlage ab, an dem diese betrieben wird. Beispielsweise ist der Grenzwert in der Nähe von Ortschaften in der Regel geringer als abseits von Ortschaften.

Um den Wirkungsgrad von Windenergieanlagen zu verbessern, nimmt die Nabenhöhe und der Durchmesser des aerodynamischen Rotors von Windenergieanlagen immer weiter zu. Bei größeren Windenergieanlagen nimmt allerdings die Schallausbreitung und insoweit auch die Schallimmission zu. Ferner kann mit der zunehmenden Größe der Windenergieanlagen auch deren Schallemission zunehmen. Ursache hierfür kann der höhere Bedarf an Kühlleistung zur Kühlung des Generators sein, da größere oder mehr Kühlvorrichtungen, beispielsweise Ventilatoren, erforderlich werden können, die einen Luftstrom mit der erforderlichen Kühlleistung bereitstellen können. Die weltweit steigende Durchschnittstemperatur verstärkt den Bedarf nach zusätzlicher Kühlleistung.

Zur Kühlung von Generatoren ist es bekannt, die zur Kühlung des Generators abzuführende erwärmte Kühlungsluft an der Außenumfangsfläche in Radialrichtung über einen ringförmigen Spalt aus dem Generator abzuführen. Ferner ist es bekannt, einem Generator Kühlungsluft in Axialrichtung zuzuführen, diese in Axialrichtung durch eine Rotor- und Statoraktiveinheit eines Generators hindurchzuführen und anschließend in Axialrichtung aus dem Generator hinauszuführen. Dies ist beispielsweise aus US 2007/0222223 A1 bekannt.

Diese bekannten Lösungen haben den Vorteil, dass sie vergleichsweise platzsparend sind und durch wenige/keine Umlenkungen, d.h. mit geringem Widerstand und vergleichsweise geringer Schallemission, die Kühlungsluft innerhalb des Generators führen. Ferner kann eine entsprechend offene Bauweise des Generators einen Bedarf an zusätzlichen Kühlungssystemen vermeiden.

Allerdings ermöglicht diese Bauweise nicht, den erzeugten Schall adäquat zu dämpfen. Insbesondere lässt sich bei diesen Generatoren deren Schallemission nicht in Abhängigkeit der am Betriebsstandort des Generators geltenden Schallemissionsgrenzwerte anpassen. Nachteilig wirkt sich bei den bekannten Lösungen ferner aus, dass Wasser und Schmutz vergleichsweise einfach in den Generatorinnenraum gelangen. In der Folge können bei diesen Generatoren dann Wartungs- und Instandhaltungsarbeiten in kurzen Intervallen erforderlich werden. Es besteht somit die Gefahr, dass der Betrieb solcher Generatoren vergleichsweise teuer werden kann.

Es ist daher eine Aufgabe, einen Generator, insbesondere einen Generator für eine Windenergieanlage, und eine Windenergieanlage bereitzustellen, die eine einfache und kostengünstige Kühlung des Generators unter Einhaltung von Schallemissionsgrenzwerten, insbesondere unter Einhaltung von Schallemissionsgrenzwerten in Abhängigkeit des Betriebsstandorts des Generators respektive der Windenergieanlage, ermöglicht.

Gemäß einem ersten Aspekt wird diese Aufgabe gelöst durch einen Generator nach Anspruch 1.

Der Generator ist insbesondere ein Generator für eine Windenergieanlage. Vorzugsweise ist der Generator als Außenläufer ausgebildet. Der Generator ist insbesondere ein elektrischer Generator. Insbesondere weist der Generator einen Rotor und einen Stator auf, wobei der Rotor relativ zu dem Stator um eine Drehachse drehbar gelagert ist. Vorzugsweise ist der Stator innerhalb des Rotors angeordnet. Es kann auch bevorzugt sein, dass der Rotor innerhalb des Stators angeordnet ist.

Vorzugsweise erstreckt sich der Generator in Axialrichtung mit einer Generatorbreite. Die Axialrichtung entspricht dabei vorzugsweise der Richtung entlang der Drehachse des Generators. Orthogonal zu der Axialrichtung in Radialrichtung erstreckt sich der Generator bevorzugt mit einem Generatordurchmesser.

Der Generator weist insbesondere ein Generatorgehäuse mit einer Innenseite und einer der Innenseite gegenüberliegenden Außenseite auf. Die Innenseite ist einem Generatorinnenraum des Generators zugewandt. Die Außenseite ist einer Umgebung des Generators zugewandt. Insbesondere grenzt das Generatorgehäuse den sich innerhalb des Generatorgehäuses erstreckenden Generatorinnenraum von der sich außerhalb des Generatorgehäuses befindenden Umgebung räumlich ab.

Der Generator weist zwei Stirnseiten auf, zwischen denen sich der Generatorinnenraum des Generators in einer Axialrichtung erstreckt. Die zwei Stirnseiten weisen eine Innenseite und eine der Innenseite gegenüberliegende Außenseite auf. Die Innenseite ist dem Generatorinnenraum des Generators zugewandt. Die Außenseite ist einer Umgebung des Generators zugewandt. Insbesondere ist bevorzugt, dass das Generatorgehäuse die zwei Stirnseiten aufweist. Insbesondere ist bevorzugt, dass eine der beiden oder beide Stirnseiten einteilig oder mehrteilig ausgebildet ist oder sind.

Ferner weist der Generator mindestens einen Luftauslasskanal und mindestens einen Lufteinlasskanal auf.

Der mindestens eine Luftauslasskanal erstreckt sich zwischen der Innenseite und der Außenseite und verbindet den Generatorinnenraum strömungstechnisch mit der Umgebung. Vorzugsweise weist der Generator mehrere Luftauslasskanäle auf. Insbesondere sind die mehreren Luftauslasskanäle in Umfangsrichtung des Generators äquidistant angeordnet.

Der mindestens eine Luftauslasskanal ist als Durchgangsöffnung ausgebildet. Der mindestens eine Luftauslasskanal kann beispielsweise rohrförmig oder schlauchförmig ausgebildet sein. Ferner kann der mindestens eine Luftauslasskanal als Leitung ausgebildet sein. Hierzu erstreckt sich der mindestens eine Luftauslasskanal in bevorzugter Weise durch das Generatorgehäuse hindurch. Vorzugsweise erstreckt sich der der mindestens eine Luftauslasskanal im Wesentlichen in Axialrichtung.

Durch den mindestens einen Luftauslasskanal lässt sich die Kühlungsluft aus dem Generator gezielt abführen. Insbesondere ermöglicht der mindestens eine Luftauslasskanal eine gezielte Führung der Kühlungsluft innerhalb des Generators.

Der mindestens eine Lufteinlasskanal erstreckt sich zwischen der Innenseite und der Außenseite und verbindet den Generatorinnenraum strömungstechnisch mit der Umgebung. Vorzugsweise weist der Generator mehrere Lufteinlasskanäle auf. Insbesondere sind die mehreren Lufteinlasskanäle in Umfangsrichtung des Generators äquidistant angeordnet.

Der mindestens eine Lufteinlasskanal ist als Durchgangsöffnung ausgebildet. Der mindestens eine Lufteinlasskanal kann beispielsweise rohrförmig oder schlauchförmig ausgebildet sein. Ferner kann der mindestens eine Lufteinlasskanal als Leitung ausgebildet sein. Hierzu erstreckt sich der mindestens eine Lufteinlasskanal in bevorzugter Weise durch das Generatorgehäuse hindurch.

Durch den mindestens einen Lufteinlasskanal lässt sich die Kühlungsluft gezielt in den Generator führen. Insbesondere ermöglicht der mindestens eine Lufteinlasskanal eine gezielte Führung der Kühlungsluft innerhalb des Generators.

Insbesondere strömt im Betrieb des Generators als Kühlungsluft Luft aus der Umgebung durch den mindestens einen Lufteinlasskanal. Es kann bevorzugt sein, an dem mindestens einen Lufteinlasskanal einen Tropfenabscheider vorzusehen, um Feuchtigkeit, insbesondere Wassertropfen, von der in den Generator einströmenden Luft abzuscheiden. Ergänzend oder alternativ kann an dem mindestens einen Lufteinlasskanal ein Luftfilter angeordnet werden, der die in den Generator einströmende Luft von Partikeln reinigt. Der Luftfilter kann Grobfilter und/oder Feinfilter umfassen. Dies erhöht in besonders vorteilhafter Weise die Lebensdauer des Generators bzw. der Windenergieanlage.

Der mindestens eine Luftauslasskanal und der mindestens eine Lufteinlasskanal sind an derselben Stirnseite des Generators angeordnet.

Ein solcher Generator ermöglicht eine einfache und kostengünstige Führung der Kühlungsluft innerhalb des Generators. Ferner ist der Generator in bevorzugter Weise im Bereich der Umlenkungen der Kühlungsluft an der Stator- und Rotoraktiveinheit gekapselt. Dies hat den Effekt, dass weniger Schall emittiert wird.

Bei einer bevorzugten Fortbildung des Generators ist vorgesehen, dass der mindestens eine Luftauslasskanal und der mindestens eine Lufteinlasskanal an der Stirnseite des Generators angeordnet sind, die in einem Betriebszustand des Generators die vom Wind abgewandte Stirnseite ist. Insbesondere sind bei einer als Luvläufer ausgebildeten Windenergieanlage der mindestens eine Luftauslasskanal und der mindestens eine Lufteinlasskanal an der Stirnseite des Generators angeordnet, die in dem Betriebszustand des Generators die von den Rotorblättern der Windenergieanlage abgewandte Stirnseite ist. Vorzugsweise ist im Betriebszustand bei einer als Luvläufer ausgebildeten Windenergieanlage die vom Wind abgewandte Stirnseite die von den Rotorblättern abgewandte Stirnseite des Generators.

Alternativ ist bei einer als Leeläufer ausgebildeten Windenergieanlage der mindestens eine Luftauslasskanal und/oder der mindestens eine Lufteinlasskanal vorzugsweise an der Stirnseite des Generators angeordnet, die in dem Betriebszustand des Generators die von den Rotorblättern zugewandte Stirnseite ist. Vorzugsweise ist im Betriebszustand bei einer als Leeläufer ausgebildeten Windenergieanlage die vom Wind abgewandte Stirnseite die von den Rotorblättern zugewandte Stirnseite des Generators.

Diese bevorzugte Ausführungsform hat den Vorteil, dass weniger Wasser und Staub von dem Wind durch den mindestens einen Luftauslasskanal und den mindestens einen Lufteinlasskanal in den Generatorinnenraum gelangen kann. Dies hat den Vorteil, dass Wartung und Instandhaltung im Vergleich zu Generatoren ohne eine solche Anordnung des mindestens einen Luftauslasskanals und des mindestens einen Lufteinlasskanals in größeren Intervallen erfolgen kann. Hierdurch können die Betriebskosten solcher Generatoren sinken.

Gemäß einer weiteren Fortbildung des Generators weist der mindestens eine Luftauslasskanal einen zylinderförmigen oder einen polygonalen Querschnitt auf.

Nach einer bevorzugten Ausführungsform des Generators ist vorgesehen, dass der mindestens eine Luftauslasskanal auf einer Kreisbahn oder auf mehreren voneinander verschiedenen Kreisbahnen angeordnet ist, die koaxial zu einer Drehachse des Generators ausgerichtet ist/sind.

Weiterhin ist nach einer bevorzugten Ausführungsform des Generators vorgesehen, dass sich der mindestens eine Luftauslasskanal im Wesentlichen in einer Axialrichtung erstreckt.

Ferner weist der Generator in einer weiteren bevorzugten Fortbildung eine Druckraumkammer auf, die mit einem Luftauslasskanal oder mehreren Luftauslasskanälen strömungstechnisch verbunden ist.

Vorzugsweise ist die Druckraumkammer zwischen dem mindestens einen Luftauslasskanal und einer Abluftkammer angeordnet und verbindet den mindestens einen Luftauslasskanal mit der Abluftkammer strömungstechnisch. Insbesondere ist die Druckraumkammer ausgebildet, die erwärmte Kühlungsluft auf den mindestens einen Luftauslasskanal aufzuteilen. Insbesondere bei Generatoren mit mehreren Luftauslasskanälen ist die Druckraumkammer ausgebildet, die erwärmte Kühlungsluft auf die Luftauslasskanäle gleichmäßig aufzuteilen.

Nach einer weiteren bevorzugten Ausführungsform des Generators ist ein Schalldämpfer an dem Generator angeordnet. Vorzugsweise ist der Schalldämpfer lösbar an dem Generator angeordnet.

Insbesondere kann eine Anordnung des mindestens einen Schalldämpfers an dem mindestens einen Luftauslasskanal eine Anordnung innerhalb des Luftauslasskanals umfassen. Es kann bevorzugt sein, dass der Schalldämpfer sich teilweise innerhalb des Luftauslasskanals erstreckt. Insbesondere kann bevorzugt sein, dass der Schalldämpfer sich vollständig durch den Luftauslasskanal erstreckt.

Die lösbare Anordnung des mindestens einen Schalldämpfers an dem Generator kann durch eine formschlüssige und/oder kraftschlüssige und/oder stoffschlüssige Verbindung realisiert werden. Als formschlüssige Verbindung kann beispielsweise eine Dreh- und/oder Schnappverbindung in Betracht kommen. Eine kraftschlüssige Verbindung kann beispielsweise durch eine Schraubverbindung realisiert sein. Eine Klebeverbindung kann beispielsweise als stoffschlüssige Verbindung vorgesehen sein.

Die lösbare Anordnung des mindestens einen Schalldämpfers an dem Generator hat den Vorteil, dass der mindestens eine Schalldämpfer besonders einfach und schnell gewechselt werden kann. Insbesondere hat dies den Vorteil, dass der Generator bzw. die Windenergieanlage aufweisend einen solchen Generator besonders einfach und schnell mit Schalldämpfern ausgestattet werden können, die den (standortabhängigen) Emissionsgrenzwerten am Standort des Betriebs genügen. Insbesondere lassen sich solche Generatoren bzw. die Windenergieanlagen ohne großen Aufwand mit Schalldämpfern nachrüsten, die auch zukünftigen Emissionsrichtlinien mit strengeren Grenzwerten genügen können.

Weiterhin ist in einer bevorzugten Fortbildung des Generators vorgesehen, dass der Schalldämpfer an dem mindestens einen Luftauslasskanal angeordnet ist. Insbesondere kann eine Anordnung des mindestens einen Schalldämpfers an dem mindestens einen Luftauslasskanal eine Anordnung innerhalb des Luftauslasskanals umfassen. Es kann bevorzugt sein, dass der Schalldämpfer sich teilweise innerhalb des Luftauslasskanals erstreckt. Insbesondere kann bevorzugt sein, dass der Schalldämpfer sich vollständig durch den Luftauslasskanal erstreckt.

Diese Anordnung ermöglicht eine besonders platzsparende und effiziente Dämpfung des emittierten Schalls. Insbesondere ermöglicht diese Ausführungsform den Einsatz standardisierter Schalldämpfer. Hierdurch lassen sich besonders kostengünstige Lösungen realisieren.

Nach einer weiteren bevorzugten Ausführungsform des Generators ist vorgesehen, dass der mindestens eine Schalldämpfer sich durch den mindestens einen Luftauslasskanal hindurch erstreckt und/oder der mindestens eine Schalldämpfer sich über die Außenseite hinaus erstreckt.

Der mindestens eine Schalldämpfer, der sich über die Außenseite hinaus erstreckt, erstreckt sich insbesondere in die Umgebung des Generators hinein. Ferner kann bevorzugt sein, dass der mindestens eine Schalldämpfer sich über die Innenseite hinaus erstreckt. Der mindestens eine Schalldämpfer, der sich überdie Innenseite hinaus erstreckt, erstreckt sich insbesondere in den Generatorinnenraum des Generators hinein.

Diese bevorzugte Ausführungsform ermöglicht, den mindestens einen Schalldämpfer in Abhängigkeit der am Standort des Generators bzw. der Windenergieanlage geltenden Emissionsgrenzwerte hinsichtlich seiner Dämpfungseigenschaften "einzustellen". Ist eine vergleichsweise hohe Schalldämpfung erforderlich, kann ein längerer Schalldämpfer vorgesehen werden; reicht hingegen eine vergleichsweise geringe Schalldämpfung aus, kann ein kürzerer Schalldämpfer vorgesehen werden. Insbesondere lassen sich solche Generatoren und entsprechende Windenergieanlagen mit entsprechenden Schalldämpfern nachrüsten, die zukünftig strengeren Schallemissionsgrenzwerten genügen.

Weiterhin ist nach einer bevorzugten Fortbildung des Generators vorgesehen, dass der mindestens eine Schalldämpfer einen Rohrschalldämpfer und/oder einen Kulissenschalldämpfer und/oder schalldämpfende Elemente aufweist.

Insbesondere ist der mindestens eine Luftauslasskanal zylinderförmig ausgebildet, wenn als Schalldämpfer Rohrschalldämpfer vorgesehen sind. Ferner ist bevorzugt, dass der mindestens eine Luftauslasskanal polygonal ausgebildet ist, wenn als Schalldämpfer Kulissenschalldämpfer vorgesehen sind.

Der Einsatz derart ausgebildeter Schalldämpfer ist besonders kostengünstig, da diese auf Standardbauteilen beruhen können. Ferner hat dies den Vorteil, dass derart ausgebildete Schalldämpfer gut verfügbar sind und somit auch kurzfristig beschafft werden können. Hierdurch lässt sich verhindern, dass Generatoren bzw. Windenergieanlagen für eine längere Zeit ausgeschaltet oder in einem reduzierten Betrieb betrieben werden müssen, um die Schallemissionsgrenzwerte einzuhalten.

Ferner weist der Generator in einer weiteren bevorzugten Fortbildung eine Absperreinheit auf. Eine solche Absperreinheit kann einteilig oder mehrteilig ausgebildet sein. Ferner kann bevorzugt sein, dass die Absperreinheit eine mechanisch betätigte Absperreinheit und/oder eine motorisch betätigte Absperreinheit ist.

Die Absperreinheit hat den Effekt, dass Umwelteinflüsse aus der Umgebung, beispielsweise Regenwasser, Staub etc. im Betriebsruhestand des Generators bzw. der Windenergieanlage nicht in den Generatorinnenraum gelangen. Insofern hat die Absperreinheit den Vorteil, dass der Generator bzw. die Windenergieanlage weniger verschmutzen und die Wahrscheinlichkeit für einen Ausfall des Generators bzw. der Windenergieanlage sinkt. Ferner hat diese Ausführungsform den Vorteil, dass die Wartung und Instandhaltung im Vergleich zu Generatoren ohne solch eine Absperreinheit in größeren Intervallen erfolgen kann. Hierdurch können die Betriebskosten solcher Generatoren sinken.

Vorzugsweise ist die Absperreinheit zwischen einer Offenstellung und einer von der Offenstellung verschiedenen Sperrstellung veränderbar. Insbesondere kann die Absperreinheit ausgebildet sein, dass diese sich während des Betriebs des Generators in der Offenstellung befindet. Die Absperreinheit kann mechanisch oder motorisch betätigt in der Offenstellung positioniert werden.

Bei einer mechanisch betätigten Absperreinheit kann beispielsweise die erwärmte Kühlungsluft, die aus dem Generator hinausströmt, die Absperreinheit in der Offenstellung positionieren. Strömt hingegen die erwärmte Kühlungsluft nicht mehr aus dem Generatorinnenraum in die Umgebung des Generators hinaus, wird die Absperreinheit in der Sperrstellung positioniert. Ferner kann bevorzugt sein, dass die Absperreinheit während des Betriebs des Generators durch einen Antrieb in der Offenstellung positioniert wird und der Antrieb die Absperreinheit in der Sperrstellung positioniert, wenn der Generator nicht mehr gekühlt wird.

Dies hat den Vorteil, dass der Luftwiederstand durch die Absperreinheit in der Offenstellung im Betrieb gering ist und der Generator bzw. der Generatorinnenraum im Betriebsruhestand durch die Absperreinheit in der Sperrstellung vor Umwelteinflüssen geschützt ist.

Besonders bevorzugt ist die Absperreinheit eine Jalousieklappe oder Rohrklappe. Dies hat den Vorteil, dass Standardbauteile als Absperreinheit eingesetzt werden können. Dies hat den Vorteil, dass derart ausgebildete Absperreinheiten gut verfügbar sind und somit auch kurzfristig beschafft werden können.

Nach einer ferner bevorzugten Ausführungsform weist der Generator einen Luftzuführkanal und eine Abluftkammer auf. Die Abluftkammer ist mit dem stromaufwärtsliegenden Luftzuführkanal strömungstechnisch verbunden.

Insbesondere sind der Luftzuführkanal und die Abluftkammer innerhalb des Generatorgehäuses, im Generatorinnenraum angeordnet. Vorzugsweise weist der Generator mehrere Luftzuführkanäle und/oder mehrere Abluftkammern auf. Insbesondere kann es bevorzugt sein, dass jeweils ein Luftzuführkanal mit einer Abluftkammer strömungstechnisch verbunden ist. Vorzugsweise sind mehrere Luftzuführkanäle in Umfangsrichtung des Generators äquidistant zueinander angeordnet. Ferner ist bevorzugt, dass die Abluftkammern in Umfangsrichtung des Generators äquidistant zueinander angeordnet sind.

Insbesondere ist der Luftzuführkanal ausgebildet, zur Kühlung des Generators Umgebungsluft als Kühlungsluft aus der Umgebung des Generators zuzuführen. Ferner ist die Abluftkammer in bevorzugter Weise ausgebildet, zur Kühlung des Generators die vom Generator "erwärmte" Kühlungsluft in Richtung der Umgebung des Generators abzuführen. Der Luftzuführkanal ermöglicht eine Zuführung der Kühlungsluft räumlich getrennt von der erwärmten Kühlungsluft, die in der Abluftkammer abgeführt wird. Ferner ist bevorzugt, dass der Luftzuführkanal und die Abluftkammer thermisch voneinander entkoppelt sind.

Ferner weist der Generator insbesondere einen Stator mit einer Statoraktiveinheit und einen um eine Drehachse relativ zu dem Stator drehbar angeordneten Rotor mit einer Rotoraktiveinheit auf. Die Rotoraktiveinheit und Statoraktiveinheit sind mit einem Luftspalt beabstandet zueinander angeordnet, durch den die Abluftkammer mit dem stromaufwärtsliegenden Luftzuführkanal strömungstechnisch verbunden ist. Der Luftspalt erstreckt sich vorzugsweise im Wesentlichen in Axialrichtung über eine Breite, insbesondere einer Breite der Rotor- und Statoraktiveinheit. Ferner ist der Luftspalt bevorzugt ringförmig ausgebildet. Insbesondere entspricht der Luftspalt in Radialrichtung dem Abstand zwischen der Rotor- und Statoraktiveinheit.

Insbesondere ist bevorzugt, dass die Abluftkammer erwärmte Kühlungsluft in Radialrichtung von der Rotor- und Statoraktiveinheit, insbesondere dem Luftspalt, in Richtung der Drehachse des Generators fördert. Ferner ist bevorzugt, dass der Luftzuführkanal Kühlungsluft in Radialrichtung von der Drehachse des Generators in Richtung der Rotor- und Statoraktiveinheit, insbesondere dem Luftspalt, fördert.

Vorzugsweise ist eine Luftfördervorrichtung stromabwärts der Abluftkammer angeordnet. Die Luftfördervorrichtung ist zur Kühlung der Rotoraktiveinheit und der Statoraktiveinheit ausgebildet. Zur Kühlung der Rotoraktiveinheit und der Statoraktiveinheit führt die Luftfördervorrichtung Kühlungsluft durch den Luftzuführkanal zu dem Luftspalt zu und von der Rotoraktiveinheit und der Statoraktiveinheit erwärmte Kühlungsluft durch die Abluftkammer von dem Luftspalt ab. Insbesondere ist der Luftzuführkanal mit dem mindestens einen Lufteinlasskanal strömungstechnisch verbunden. Die Abluftkammer ist insbesondere ausgebildet, die erwärmte Kühlungsluft in Bezug zu der Drehachse im Wesentlichen in einer Radialrichtung abzuführen.

Darüber hinaus wird die eingangs genannte Aufgabe gelöst durch eine Windenergieanlage, umfassend einen Generator wie vorstehend beschrieben.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Generators verwiesen.

Bevorzugte Ausführungsbeispiele werden beispielhaft anhand der beiliegenden Figuren beschrieben. Es zeigen:
- Figur 1:: eine schematische, dreidimensionale Ansicht einer beispielhaften Ausführungsform einer Windenergieanlage;
- Figur 2:: eine Draufsicht einer bevorzugten Ausführungsform eines Generators;
- Figur 3:: eine Seitenansicht des in Figur 2 dargestellten Generators in der Draufsicht;
- Figur 4:: eine Schnittansicht des in Figur 3 dargestellten Generators in der Seitenansicht;
- Figur 5:: eine Detailansicht der in Figur 4 dargestellten Generators in der Schnittansicht; und
- Figur 6:: eine Schnittansicht einerweiteren bevorzugten Ausführungsform eines Generators.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

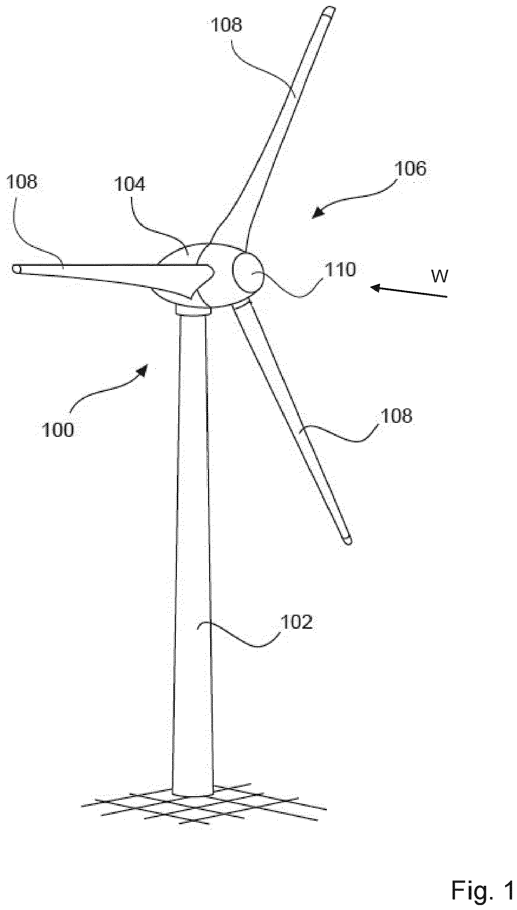

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, sodass der Generator im Detail nicht erkennbar ist.

Figur 1 zeigt eine schematische, dreidimensionale Ansicht einer Windenergieanlage 100. Die Windenergieanlage 100 weist einen Turm 102 und eine Gondel 104 auf dem Turm 102 auf. Der Turm 102 kann hierbei aus aneinander angeordneten Turmsegmenten bestehen. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind W in eine Drehbewegung versetzt und dreht somit auch einen elektrodynamischen Rotor oder Läufer eines Generators 10, welcher direkt oder indirekt mit dem aerodynamischen Rotor 106 gekoppelt ist. Der Generator 10 ist in der Gondel 104 angeordnet und erzeugt elektrische Energie.

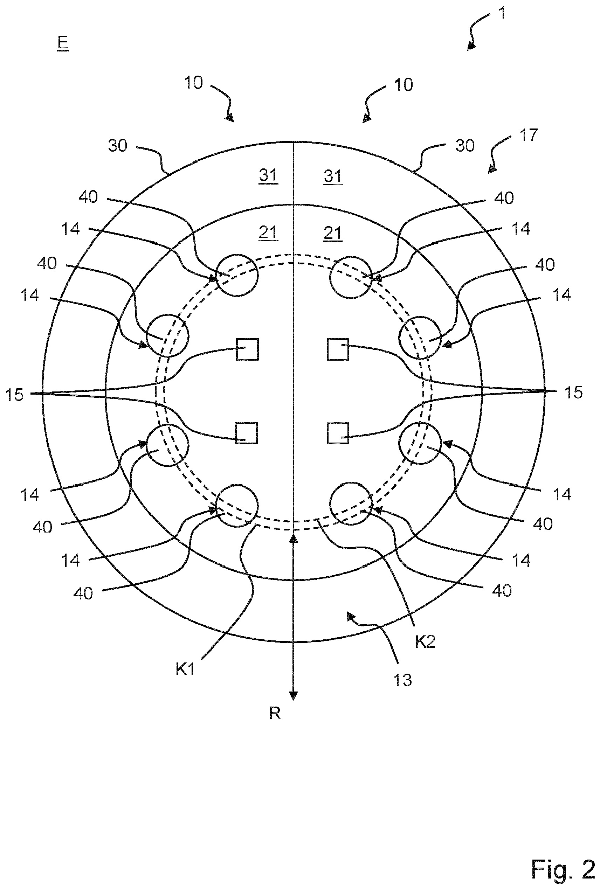

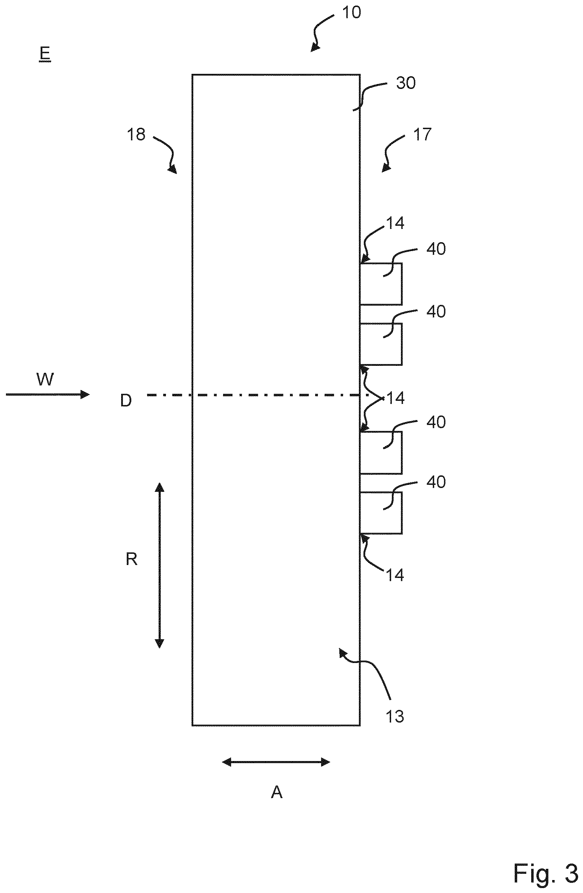

Figuren 2 und 3 zeigen eine bevorzugte Ausführungsform eines Generators 10 für eine solche Windenergieanlage 100 zur elektrischen Energieerzeugung. Figur 2 zeigt den Generator 10 in einer Draufsicht und Figur 3 zeigt den Generator 10 in einer Seitenansicht. Der Generator 10 ist in dieser bevorzugten Ausführungsform als Außenläufer ausgebildet.

Der Generator 10 weist ein Generatorgehäuse mit einer Außenseite 13 auf, die einer Umgebung E des Generators 10 zugewandt ist. Ferner weist der Generator 10 eine Innenseite 12 (in Figuren 2 und 3 nicht dargestellt) auf, die einem Generatorinnenraum 16 (in Figuren 2 und 3 nicht dargestellt) zugewandt ist und der Außenseite 13 gegenüberliegt. Der Generatorinnenraum 16 ist in Axialrichtung A durch zwei Stirnseiten 17, 18, einer im Betriebszustand vom Wind W abgewandten Stirnseite (windabgewandte Stirnseite) und einer im Betriebszustand dem Wind Wzugewandten Stirnseite 18 (windzugewandte Stirnseite), räumlich begrenzt. In der vorliegenden Ausführungsform bilden beispielsweise ein Rotor-Leeverkleidungselement 31 und ein Stator-Verkleidungselement 21 die windabgewandte Stirnseite 17 und ein Rotor-Luwerkleidungselement 32 die windzugewandte Stirnseite 18. Die beiden Stirnseiten 17, 18 weisen jeweils eine Innenseite 12 und eine Außenseite 13 auf.

Der Generator 10 weist acht Luftauslasskanäle 14 und vier Lufteinlasskanäle 15 auf, die sich zwischen der Innenseite 12 und der Außenseite 13 erstrecken und den Generatorinnenraum 16 strömungstechnisch mit der Umgebung E verbinden. Dabei sind die Lufteinlasskanäle ausgebildet, dass Luft aus der Umgebung E in den Generatorinnenraum 16 gelangt. Die Luftauslasskanäle sind ausgebildet, dass Luft aus dem Generatorinnenraum 16 in die Umgebung E gelangt. Es ist zu erkennen, dass die in Figur 2 dargestellten zwei linken und zwei rechten Luftauslasskanäle auf einer Kreisbahn K1 und die zwei oberen und zwei unteren Luftauslasskanäle auf einer Kreisbahn K2, die von der Kreisbahn K1 verschieden ist, angeordnet sind.

Die Luftauslasskanäle 14 sind in der vorliegenden bevorzugten Ausführungsform zylinderförmig ausgebildet. Die Lufteinlasskanäle 15 sind in der vorliegenden bevorzugten Ausführungsform polygonal ausgebildet. Sowohl die Luftauslasskanäle 14 als auch die Lufteinlasskanäle 15 erstrecken sich im Wesentlichen in Axialrichtung A. Sowohl die Luftauslasskanäle 14 als auch die Lufteinlasskanäle 15 sind in dieser bevorzugten Ausführungsform des Generators an derselben Stirnseite angeordnet; hier an der windabgewandten Stirnseite 17 in dem Stator-Verkleidungselement 21 ausgebildet. Das heißt, die Luftauslasskanäle 14 und die Lufteinlasskanäle 15 sind an der Stirnseite 17 des Generator 10 angeordnet, die in dem Betriebszustand des Generators 10 die vom Wind W abgewandte Stirnseite 17 ist; sprich, die Luftauslasskanäle 14 und die Lufteinlasskanäle 15 befinden sich im Betriebszustand des Generators 10 an jener Stirnseite 10, die der Gondel 104 bzw. dem Maschinenhaus zugewandt ist.

An dem Generator 10 sind acht Schalldämpfer 40 lösbar angeordnet. Konkret ist je ein Schalldämpfer 40 an jeweils einem Luftauslasskanal 14 angeordnet. Die Schalldämpfer 40 sind an den Luftauslasskanälen 14 derart angeordnet, dass diese sich durch den jeweiligen Luftauslasskanal 14 hindurch erstrecken. Die Schalldämpfer 40 weisen in Axialrichtung A eine Länge auf, die es erfordert, dass die Schalldämpfer 40 sich über die Außenseite 13 hinaus, d.h. in die Umgebung E hinein, erstrecken. In der bevorzugten Ausführungsform sind die Schalldämpfer 40 als Rohrschalldämpfer ausgebildet. Es kann allerdings auch bevorzugt sein, Kulissenschalldämpfer als Schalldämpfer 40 vorzusehen. Ergänzend oder alternativ können an den Luftauslässen 14 auch schalldämpfende Elemente 40 angeordnet werden.

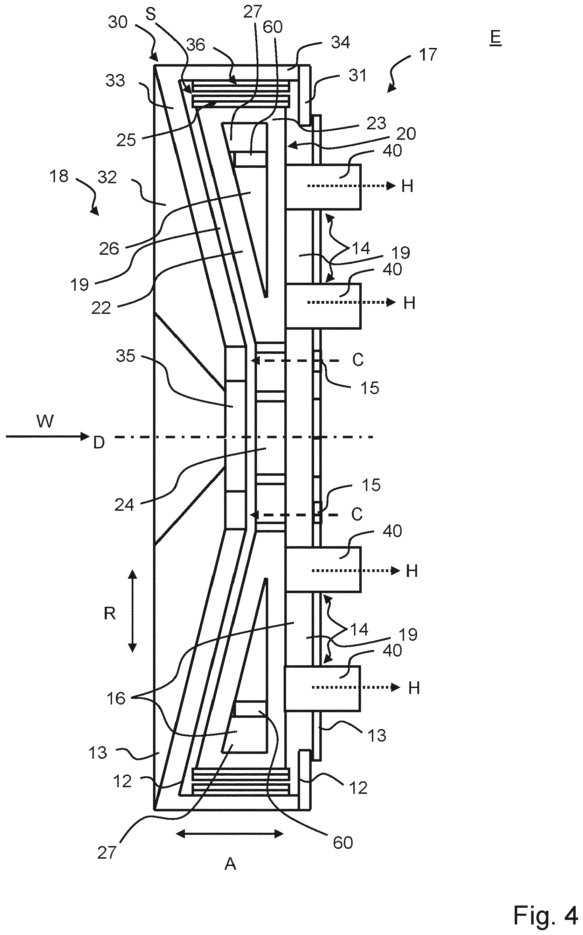

Figur 4 zeigt eine Schnittansicht des in den Figuren 2 und 3 dargestellten Generators 10. Diese Schnittansicht zeigt den Generatorinnenraum 16 des Generators 10 im Detail. Es ist zu erkennen, dass der Rotor 30 eine Rotoraktiveinheit 36 an einem Magnetträgersegment 34 aufweist, das über eine Rotortragstruktur 33 drehbar um eine Drehachse D gehalten wird. Ferner ist zu erkennen, dass der Stator 20 eine Statoraktiveinheit 25 an einem Spulenträgersegment 23 aufweist, das über eine Statortragstruktur 22 koaxial zu der Drehachse D angeordnet ist. Der Rotor 30 ist um die Drehachse D relativ zu dem Stator 20 drehbar angeordnet.

Rotor 30 und Stator 20 sind derart zueinander positioniert, dass die Rotoraktiveinheit 36 und die Statoraktiveinheit 25 mit einem Luftspalt S beanstandet zueinander angeordnet sind. Zur Kühlung des Generators 10 wird durch den Luftspalt S Kühlungsluft C hindurchgeführt wird. Dazu wird im Betrieb Kühlungsluft C durch einen Luftzuführkanal 19 zu dem Luftspalt S geführt, der mit den Lufteinlasskanälen 15 strömungstechnisch verbunden ist. Der Luftzuführkanal 19 ist dabei derart ausgebildet, dass die Kühlungsluft C in Bezug zu der Drehachse D im Wesentlichen in der Radialrichtung R nach außen in Richtung des Magnetträgersegments 34 geführt wird. Den Luftzuführkanal 19 bilden dabei der Rotor und der zum Rotor beabstandet angeordnete Stator. Insbesondere bilden den Luftzuführkanal 19 vorliegend einerseits die Rotortragstruktur 33 mit dem Rotor-Luwerkleidungselement 32 und die Statortragstruktur 22 und andererseits das Stator-Verkleidungselement 21 bzw. das Rotor-Leeverkleidungselement 31 und die Statortragstruktur 22.

Die von der Rotoraktiveinheit 36 und der Statoraktiveinheit 25 erwärmte Kühlungsluft H wird wiederum durch Abluftkammern 27 von dem Luftspalt S, der die Abluftkammern 27 mit dem stromaufwärtsliegenden Luftzuführkanal 19 strömungstechnisch verbindet, in Radialrichtung R nach innen abgeführt. Hierzu sind die Abluftkammern innerhalb des Stators 20 bzw. innerhalb der Statortragstruktur 22 des Stators 20 angeordnet. Die Abluftkammern 27 sind also ausgebildet, die erwärmte Kühlungsluft H in Bezug zu der Drehachse D im Wesentlichen in einer Radialrichtung R abzuführen.

Zur Förderung der Kühlungsluft C bzw. der erwärmten Kühlungsluft H durch den Generatorinnenraum 16 weist der Generator mehrere Luftfördervorrichtungen 60, beispielsweise Ventilatoren, auf, die durch eine Druckraumkammer 26 mit den Luftauslasskanälen 14 strömungstechnisch verbunden sind. Die Druckraumkammer 26 ist also zwischen den Luftauslasskanälen 14 und den Abluftkammern 27 bzw. den Luftfördervorrichtungen 60 angeordnet und verbindet die Abluftkammern 27 über die Luftfördervorrichtungen 60 strömungstechnisch mit den Luftauslasskanälen 14. Dazu sind die Luftfördervorrichtungen 60 stromabwärts der Abluftkammern 27 angeordnet.

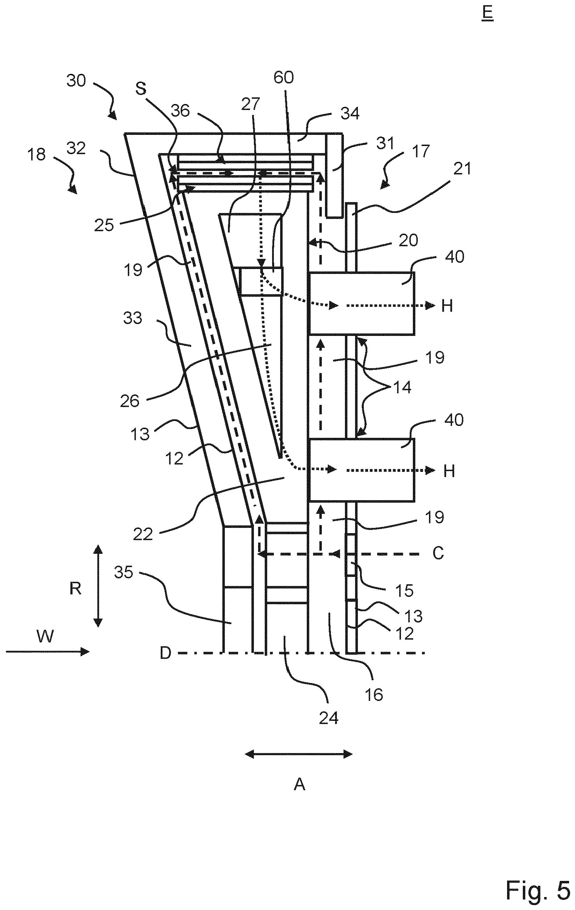

Figur 5 zeigt eine Detailansicht der in Figur 4 dargestellten Schnittansicht. Aus der Detailansicht wird die Führung der Kühlungsluft C (gestrichelte Linie) und der erwärmten Kühlungsluft H (gepunktete Linie) deutlich. Es ist zu sehen, dass die Kühlungsluft C durch die Lufteinlasskanäle 15 in den Generatorinnenraum 16 eintritt und über die Luftzuführkanäle dem Luftspalt S zwischen den Aktiveinheiten 25, 36 zugeführt wird. Die stromabwärts des Luftspalts S innerhalb der Statortragstruktur 22 angeordneten Luftfördervorrichtung saugen die erwärmte Kühlungsluft H durch Abluftkammern 27 an und fördern die erwärmte Kühlungsluft H durch die Druckraumkammer 26 und durch die in den Luftauslasskanälen 14 angeordneten Schalldämpfer 40 in die Umgebung E.

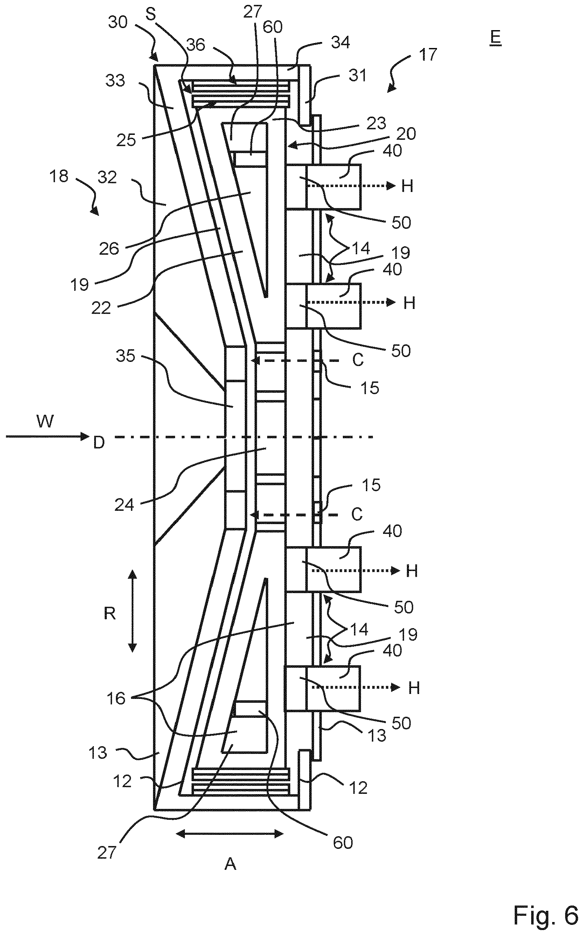

Figur 6 zeigt eine Schnittansicht einer weiteren bevorzugten Ausführungsform eines Generators 10. Diese weitere Ausführungsform beruht im Wesentlichen auf der in den Figuren 2 bis 5 dargestellten bevorzugten Ausführungsform des Generators 10.

Die in Figur 6 gezeigte Ausführungsform weist ferner mehrere Absperreinheiten 50 auf. Es ist hierbei vorgesehen, dass jeweils eine Absperreinheit 50 einem Luftauslasskanal 14 zugeordnet ist. Hierzu sind die Absperreinheiten innerhalb des Generatorinnenraums 16 in Strömungsrichtung vorgelagert zu den Schalldämpfern 40 angeordnet. Die Absperreinheiten 50 sind beispielsweise Jalousieklappen oder Rohrklappen, die zwischen einer Offenstellung und einer von der Offenstellung verschiedenen Sperrstellung veränderbar sind. In der Offenstellung verbinden die Absperreinheiten 50 die Druckraumkammer strömungstechnischen mit den Luftauslasskanälen 14 bzw. den Schalldämpfern 40. In der Sperrstellung verhindern die Absperreinheiten 50, dass Umwelteinflüsse, d.h. Schmutz, Regen oder dergleichen, aus der Umgebung E in den Generatorinnenraum 16 gelangen.

### Bezuqszeichenliste

- 10: Generator
- 12: Innenseite
- 13: Außenseite
- 14: Luftauslasskanal
- 15: Lufteinlasskanal
- 16: Generatorinnenraum
- 17: windabgewandte Stirnseite
- 18: windzugewandte Stirnseite
- 19: Luftzuführkanal
- 20: Stator
- 21: Stator-Verkleidungselement
- 22: Statortragstruktur
- 23: Spulenträgersegment
- 25: Statoraktiveinheit bzw. Spuleneinheit
- 26: Druckraumkammer
- 27: Abluftkammer
- 30: Rotor
- 31: Rotor-Leeverkleidungselement
- 32: Rotor-Luwerkleidungselement
- 33: Rotortragstruktur
- 34: Magnetträgersegment
- 36: Rotoraktiveinheit bzw. Magneteinheiten
- 40: Schalldämpfer
- 50: Absperreinheit
- 60: Luftfördervorrichtung
- 100: Windenergieanlage
- 102: Turm
- 104: Gondel
- 106: aerodynamischer Rotor
- 108: Rotorblätter
- 110: Spinner
- A: Axialrichtung
- C: Kühlungsluft
- D: Drehachse
- E: Umgebung
- H: erwärmte Kühlungsluft, Warmluft
- K1,2: Kreisbahnen
- R: Radialrichtung
- S: Luftspalt
- W: Wind(richtung)

## Patentansprüche

1. Generator (10), insbesondere Generator (10) für eine Windenergieanlage (100), der Generator (10) aufweisend:
- zwei Stirnseiten (17, 18), zwischen denen sich ein Generatorinnenraum (16) des Generators (10) in einer Axialrichtung (A) erstreckt; wobei die zwei Stirnseiten (17, 18) aufweisen:
• eine Innenseite, die einem Generatorinnenraum (16) des Generators (10) zugewandt ist, und
• eine der Innenseite (12) gegenüberliegende Außenseite (13), die einer Umgebung (E) des Generators (10) zugewandt ist,
- mindestens einen Luftauslasskanal (14) und mindestens einen Lufteinlasskanal (15), die sich zwischen der Innenseite (12) und der Außenseite (13) erstrecken und jeweils den Generatorinnenraum (16) strömungstechnisch mit der Umgebung (E) verbinden,
**dadurch gekennzeichnet, dass**
- der mindestens eine Luftauslasskanal (14) und der mindestens eine Lufteinlasskanal (15) an derselben Stirnseite (17, 18) des Generators (10) angeordnet sind.

2. Generator (10) nach dem vorhergehenden Anspruch 1, wobei
der mindestens eine Luftauslasskanal (14) und der mindestens eine Lufteinlasskanal (15) an der Stirnseite (17, 18) des Generators (10) angeordnet sind,
die in einem Betriebszustand des Generators (10) die vom Wind (W) abgewandte Stirnseite (17) ist.

3. Generator (10) nach einem der vorhergehenden Ansprüche 1 oder 2, wobei der mindestens eine Luftauslasskanal (14) einen zylinderförmigen oder einen polygonalen Querschnitt aufweist.

4. Generator (10) nach einem der vorhergehenden Ansprüche 1 bis 3, wobei
der mindestens eine Luftauslasskanal (14) auf einer Kreisbahn (K1, K2) oder auf mehreren voneinander verschiedenen Kreisbahnen (K1, K2) angeordnet ist, die koaxial zu einer Drehachse (D) des Generators ausgerichtet ist/sind.

5. Generator (10) nach einem der vorhergehenden Ansprüche 1 bis 4, wobei
sich der mindestens eine Luftauslasskanal (14) im Wesentlichen in einer Axialrichtung (A) erstreckt.

6. Generator (10) nach einem der vorhergehenden Ansprüche 1 bis 5, aufweisend
eine Druckraumkammer (26), die mit einem Luftauslasskanal (14) oder mehreren Luftauslasskanälen (14) strömungstechnisch verbunden ist.

7. Generator (10) nach einem der vorhergehenden Ansprüche 1 bis 6, wobei ein Schalldämpfer (40) an dem Generator (10) angeordnet ist, wobei vorzugsweise der Schalldämpfer (40) an dem Generator (10) lösbar angeordnet ist.

8. Generator (10) nach dem vorhergehenden Anspruch 7, wobei
der Schalldämpfer (40) an dem mindestens einen Luftauslasskanal (14) angeordnet ist.

9. Generator (10) nach einem der vorhergehenden Ansprüche 1 bis 8, wobei
der mindestens eine Schalldämpfer (40) sich durch den mindestens einen Luftauslasskanal (14) hindurch erstreckt und/oder der mindestens eine Schalldämpfer (40) sich über die Außenseite (13) hinaus erstreckt.

10. Generator (10) nach einem der vorhergehenden Ansprüche 1 bis 9, wobei
der mindestens eine Schalldämpfer (40) einen Rohrschalldämpfer und/oder einen Kulissenschalldämpfer und/oder schalldämpfende Elemente aufweist.

11. Generator (10) nach einem der vorhergehenden Ansprüche 1 bis 10, aufweisend eine Absperreinheit (50),
wobei vorzugsweise die Absperreinheit (50) zwischen einer Offenstellung und einer von der Offenstellung verschiedenen Sperrstellung veränderbar ist,
wobei besonders bevorzugt die Absperreinheit (50) eine Jalousieklappe oder Rohrklappe ist.

12. Generator (10) nach einem dem vorhergehenden Ansprüche 1 bis 11, aufweisend:
- einen Luftzuführkanal (19) und eine Abluftkammer (27), die mit dem stromaufwärtsliegenden Luftzuführkanal (19) strömungstechnisch verbunden ist,
- einen Rotor (30) mit einer Rotoraktiveinheit (36) und einen Stator (20) mit einer Statoraktiveinheit (25), wobei
- die Rotoraktiveinheit (36) und die Statoraktiveinheit (25) mit einem Luftspalt (S) beabstandet zueinander angeordnet sind, durch den die Abluftkammer (27) mit dem stromaufwärtsliegenden Luftzuführkanal (19) strömungstechnisch verbunden ist,
- wobei vorzugsweise eine Luftfördervorrichtung (60) stromabwärts der Abluftkammer (27) angeordnet ist, die zur Kühlung der Rotoraktiveinheit (36) und der Statoraktiveinheit (25) ausgebildet ist, wobei die Luftfördervorrichtung (60) zur Kühlung der Rotoraktiveinheit (36) und der Statoraktiveinheit (25)
• Kühlungsluft (C) durch den Luftzuführkanal (19) zu dem Luftspalt (S) zuführt, und
• von der Rotoraktiveinheit (36) und der Statoraktiveinheit (25) erwärmte Kühlungsluft (H) durch die Abluftkammer (27) von dem Luftspalt abführt.
- wobei insbesondere der Luftzuführkanal (19) mit dem mindestens einen Lufteinlasskanal (15) strömungstechnisch verbunden ist.

13. Windenergieanlage (100), aufweisend einen Generator (10) nach einem der vorhergehenden Ansprüche 1-12.
